# FASCICULE DE BREVET EUROPEEN

(11) **EP 3 774 506 B1**
(45) Date de publication et mention de la délivrance du brevet: **02.08.2023**
(21) Numéro de dépôt: 19721660.9
(22) Date de dépôt: 03.04.2019
(51) Int. Cl.: B62D 57/024, E04F 21/18

(54) **DISPOSITIF AUTOMATISÉ POUR PANNEAUX DE CONSTRUCTION**
AUTOMATISIERTE VORRICHTUNG FÜR BAUPLATTEN
AUTOMATED DEVICE FOR BUILDING BOARDS

(30) Priorité: 04.04.2018 FR 1852937
(43) Date de publication de la demande: 17.02.2021
(73) Titulaire: SAINT-GOBAIN PLACO, 92400 Courbevoie (FR)
(72) Inventeur: LOMBARD, Pierre, 93303 AUBERVILLIERS (FR); DIEU, Stéphane, 85190 AIZENAY (FR)
(74) Mandataire: Ex Materia
(86) Numéro de dépôt international: PCT/FR2019/050782
(87) Numéro de publication internationale: WO 2019/193285

(56) Documents cités:
- EP-A1- 3 031 705
- WO-A1-2013/019301
- US-A1- 2011 002 751
- US-A1- 2015 003 927
- US-B1- 9 221 506

## Description

Le domaine de la présente invention est celui des dispositifs automatisés utilisés dans la construction de bâtiments, et plus particulièrement des robots capables de réaliser des opérations mécaniques sur des supports employés dans le bâtiment tels que des panneaux de construction.

Les panneaux de construction sont largement employés dans l'industrie du bâtiment par exemple pour réaliser des cloisons, des sols ou des plafonds, pour habiller de telles surfaces, les isoler thermiquement et/ou acoustiquement, protéger ces surfaces de l'humidité, ou encore doubler ces surfaces. Les panneaux de constructions correspondent à des plaques faites d'un matériau choisi en fonction de son emploi. A titre indicatif, on peut citer les panneaux de constructions comprenant du plâtre, du bois ou des particules de bois, des matériaux synthétiques, des fibres mélangées, des particules minérales, ou un mélange de ces matériaux, ces panneaux de construction pouvant en outre être recouverts d'un revêtement de surface en une matière distincte du matériau choisi.

Une ossature sert de support à la fixation sur les murs et les plafonds de tels panneaux de construction. Cette intervention nécessite de réaliser plusieurs fixations successives de moyens de fixation. Ces fixations assurent que chaque panneau de construction est solidaire de l'ossature. Pour une fixation optimale, douze vis par mètre carré de panneau de construction sont en moyenne nécessaires. Ainsi, on comprend que pour la réalisation d'une cloison entière, cette étape de fixation des panneaux de construction est particulièrement chronophage pour le technicien en charge de cette opération. Ceci représente un premier inconvénient de la technique connue à ce jour.

Par ailleurs, les outils de fixation habituellement utilisés sont souvent lourds, ce qui ajoute une contrainte supplémentaire pour le technicien. L'étape de fixation peut alors devenir particulièrement pénible, notamment lorsqu'il s'agit de fixer un panneau de construction sur un plafond ou lorsqu'il s'agit de fixer une partie supérieure du panneau de construction située au-dessus du technicien en charge de l'opération. Ceci représente un second inconvénient.

Le document US9221506 divulgue les caractéristiques techniques du préambule de la revendication 1.

La présente invention a pour but de proposer un dispositif automatisé qui corrige les inconvénients énoncés précédemment et de conduire en outre à d'autres avantages.

L'invention y parvient grâce à un dispositif automatisé selon la revendication 1 et configuré pour se déplacer en appui sur un panneau de construction, le dispositif automatisé comprenant un châssis porteur d'un outil, ledit outil étant configuré pour réaliser au moins une opération mécanique sur le panneau de construction, le dispositif automatisé comprenant au moins un organe d'aspiration et au moins un moyen de mise en mouvement du dispositif automatisé le long du panneau de construction, le dispositif automatisé comprenant au moins deux chambres configurés pour maintenir le dispositif automatisé contre le panneau de construction, l'outil étant situé entre lesdites au moins deux chambres.

La présente invention vise donc à répondre aux contraintes énoncées ci-dessus en proposant un dispositif automatisé fiable et capable de se déplacer facilement sur le panneau de construction, réalisant les opérations mécaniques habituellement dévolues au technicien plaquiste. Un tel dispositif automatisé selon l'invention permet d'effectuer en toute sécurité ces opérations mécaniques de manière répétitives sur un panneau de construction couvrant un mur, un plafond ou un plancher. Un tel dispositif automatisé est adapté aux contraintes d'adhérence et de frottement inhérentes à toute inclinaison de la surface sur laquelle il se déplace.

Cette configuration selon l'invention permet de positionner l'outil entre les chambres du dispositif automatisé, et donc de supprimer tout décalage de l'outil par rapport aux chambres. Ainsi, l'outil ne provoque plus de déséquilibre au niveau du dispositif automatisé, favorisant ainsi l'adhérence du dispositif automatisé sur le panneau de construction sur lequel il repose, même lorsque l'outil génère un effort important pendant qu'il met en oeuvre l'opération mécanique.

L'outil est disposé entre au moins deux chambres en étant placé à l'intérieur d'un unique périmètre joignant un bord extérieur de chaque chambre, un tel bord étant par exemple matérialisé par un dispositif d'étanchéité. Dit autrement, l'outil est entre les chambres et à l'intérieur d'un polygone passant par un bord externe du châssis.

A titre indicatif, on peut citer les panneaux de constructions comprenant du plâtre, du bois ou des particules de bois, des matériaux synthétiques, des fibres mélangées, des particules minérales, ou un mélange de ces matériaux, ces panneaux de construction pouvant en outre être recouverts d'un revêtement de surface en une matière distincte du matériau choisi.

Selon un aspect de l'invention, le dispositif automatisé comprend au moins un moteur électrique d'aspiration et l'au moins un organe d'aspiration comprend des moyens de mise en dépression, lesdits moyens de mise en dépression générant une dépression au niveau desdites au moins deux chambres lorsqu'ils sont mis en rotation par ledit moteur électrique d'aspiration. La dépression induite par le moteur électrique d'aspiration et les moyens de mise en dépression génère une force d'aspiration au niveau des chambres du dispositif automatisé. Préférentiellement, les moyens de mise en dépression comprennent au moins une hélice, le moteur électrique d'aspiration permettant la mise en rotation de ladite au moins une hélice. La rotation de l'hélice génère alors une dépression au niveau d'au moins une chambre.

La force d'aspiration générée par l'organe d'aspiration du dispositif automatisé est perpendiculaire à un plan d'extension général du châssis du dispositif automatisé, le châssis du dispositif automatisé étant l'élément constitutif de la structure dudit dispositif automatisé. Plus particulièrement, le plan d'extension général du châssis du dispositif automatisé est le plan le plus grand selon lequel s'étend le châssis du dispositif automatisé. Cette configuration permet de plaquer le dispositif automatisé contre le panneau de construction, quelle que soit l'inclinaison du panneau de construction.

Selon un aspect de l'invention, le moteur électrique d'aspiration est alimenté par une alimentation électrique externe au dispositif automatisé. Alternativement, le moteur électrique d'aspiration est alimenté par une alimentation électrique intégrée au dispositif automatisé.

Selon un autre aspect de l'invention, chaque organe d'aspiration comprend au moins un dispositif d'étanchéité et un plateau constitutif du châssis, le dispositif d'étanchéité et le plateau délimitant l'une des chambres.

Le châssis comprend au moins deux plateformes, chaque plateforme comprenant au moins un plateau, et un organe d'aspiration. Chaque plateau s'étend dans un plan parallèle au plan d'extension général du châssis du dispositif automatisé. Plus particulièrement, chaque plateau comprend une face supérieure et une face inférieure. La face inférieure d'un plateau est orientée vers le panneau de construction lorsque le dispositif automatisé est en appui contre celui-ci. La face supérieure du plateau est la face qui est tournée vers l'outil. Le dispositif d'étanchéité est localisé entre la face inférieure du plateau et le panneau de construction. Ainsi, chaque chambre définit un volume, ledit volume étant délimité par la face inférieure du plateau, par le dispositif d'étanchéité et par une bouche du dispositif d'étanchéité destinée à prendre appui contre le panneau de construction.

Selon un aspect de l'invention, chaque plateforme du dispositif automatisé supporte un organe d'aspiration. L'organe d'aspiration d'une plateforme est alors associé à la chambre qui délimitée par cette même plateforme.

Selon au moins une chambre est également délimitée par un dispositif d'étanchéité, ledit dispositif d'étanchéité étant solidaire de la plateforme qui délimite la chambre. Plus particulièrement, une première face du dispositif d'étanchéité est en appui contre la plateforme du dispositif automatisé et une deuxième face du dispositif d'étanchéité est en appui contre le panneau de construction. Cette configuration permet de limiter, voire de supprimer les fuites d'air entre la chambre et l'environnement extérieur, nécessitant ainsi une force d'aspiration plus faible pour faire adhérer le dispositif automatisé au panneau de construction. L'utilisation d'une force d'aspiration plus faible permet une diminution de la quantité d'énergie requise par l'organe d'aspiration pour faire adhérer le dispositif automatisé au panneau de construction. Cette disposition spécifique du dispositif d'étanchéité et de la plateforme garantit également une mise en appui de la plateforme contre le panneau de construction, ce qui contribue significativement à stabiliser le dispositif automatisé quand l'outil est mis en oeuvre.

Selon un autre aspect de l'invention, la plateforme comprend un orifice permettant une communication entre la chambre et un environnement extérieur à ladite chambre. Cette configuration permet de limiter voire de supprimer la dépression au sein de la chambre.

La plateforme comporte également un élément d'obturation configuré pour obturer, partiellement ou intégralement, l'orifice de la plateforme. Plus particulièrement, l'élément d'obturation est un clapet, une valve ou un volet. Cette configuration permet une dépression maximale au sein de la chambre lorsque l'orifice de la plateforme est obturé intégralement par l'élément d'obturation. A l'inverse, la dépression au niveau de la chambre est plus faible lorsque l'élément d'obturation n'obture pas intégralement l'orifice de la plateforme. Ainsi, l'élément d'obturation de l'orifice de la plateforme permet une modulation du niveau de dépression au sein de la chambre comprenant un tel élément d'obturation.

La force d'aspiration nécessaire pour faire adhérer le dispositif automatisé au panneau de construction peut varier, notamment en fonction de l'angle d'inclinaison du panneau de construction par rapport à un plan horizontal, ou encore si le dispositif automatisé est suspendu à un plafond, ou encore en fonction d'une contre-force exercée par l'outil sur le panneau de construction, ladite contre-force étant exercée lorsque l'outil réalise une opération mécanique sur le panneau de construction. Ainsi, la force d'aspiration générée par le moteur électrique d'aspiration et les moyens de mise en dépression peut nécessiter d'être modulée. Plus particulièrement, la modulation de la force d'aspiration au niveau d'une chambre peut être obtenue, par exemple, par une modulation de la vitesse de rotation de l'hélice, ou par la modulation de l'ouverture de l'élément d'obturation de la plateforme.

Selon un premier mode de réalisation, l'organe d'aspiration du dispositif automatisé comprend un unique moteur électrique d'aspiration configuré pour générer une force d'aspiration au niveau desdites au moins deux chambres. Plus particulièrement, l'organe d'aspiration comprend un unique moyen de mise en dépression coopérant avec lesdites au moins deux chambres. Alternativement, l'organe d'aspiration comprend un unique moteur électrique d'aspiration et au moins deux moyens de mise en dépression, lesdits au moins deux moyens de mise en dépression coopérant chacun avec une chambre distincte.

Selon un deuxième mode de réalisation, l'organe d'aspiration du dispositif automatisé comprend au moins deux moteurs électriques configurés pour générer une force d'aspiration au niveau desdites au moins deux chambres, chaque moteur électrique d'aspiration coopérant avec une chambre distincte d'une autre chambre. Plus particulièrement, chaque moteur électrique d'aspiration coopère avec un moyen de mise en dépression distinct afin de générer une force d'aspiration au niveau d'une chambre distincte de l'autre chambre. En d'autres termes, chaque moteur électrique d'aspiration est associé à une unique chambre.

Selon un autre aspect de l'invention, lesdites au moins deux chambres sont régulièrement angulairement disposées autour de l'outil.

Cette configuration permet de stabiliser le dispositif automatisé sur le panneau de construction. Ainsi, si le dispositif automatisé comprend deux chambres, lesdites deux chambres sont angulairement espacées de 180° l'une par rapport à l'autre. D'autre part, dans le cas où le dispositif automatisé comprend trois chambres, lesdites trois chambres sont angulairement espacées de 120° l'une par rapport à l'autre. En outre, dans le cas où le dispositif comprend quatre chambres, lesdites quatre chambres sont angulairement espacées de 90° l'une par rapport à l'autre.

Selon une première alternative de réalisation de l'invention, chaque chambre s'étend autour d'un axe central, l'outil étant disposé à égale distance de l'axe central de chaque chambre. L'axe central d'une chambre est défini par une droite qui s'étend perpendiculairement au plan d'extension général du châssis du dispositif automatisé, ladite droite passant par le centre de la chambre. L'outil est alors situé au niveau d'un plan transversal central du dispositif automatisé, le plan transversal central du dispositif automatisé étant perpendiculaire au plan d'extension général du châssis et situé à égale distance de l'axe central de chaque chambre.

Selon un aspect de cette première alternative de l'invention, l'organe d'aspiration est configuré pour exercer une force d'aspiration identique, ou sensiblement identique, au niveau de chaque chambre, lesdites chambres étant disposées symétriquement par rapport à l'outil. Deux forces d'aspiration seront considérées comme identique si leur différence d'aspiration n'excède pas 10% de la force de l'une des forces d'aspiration.

Selon une deuxième alternative de réalisation de l'invention, chaque chambre s'étend autour d'un axe central, l'outil étant plus proche de l'axe central d'une première chambre que de l'axe central de la deuxième chambre. Ainsi, l'outil n'est pas localisé au niveau du plan transversal central du dispositif automatisé. L'outil est décalé par rapport à un plan transversal central, le plan transversal central étant transversal par rapport au plan d'extension longitudinal du dispositif automatisé. Cette configuration permet par exemple de décaler l'outil par rapport au plan transversal central du dispositif automatisé, libérant ainsi un espace qui peut être utilisé pour loger un moteur électrique d'aspiration, ou tout autre périphérique nécessaire au fonctionnement du dispositif automatisé, comme par exemple l'unité de contrôle ou une réserve de dispositif de fixation, comme des vis posées sur un ruban.

Plus particulièrement selon la deuxième alternative de réalisation, l'organe d'aspiration est configuré pour exercer une force d'aspiration qui compense un décalage de l'outil par rapport au plan transversal central du dispositif automatisé. Ainsi, une force d'aspiration plus importante doit être générée au niveau d'une chambre d'aspiration lors d'un décalage de l'outil vers ladite chambre d'aspiration par rapport au plan transversal central du dispositif automatisé.

La compensation de ce décalage peut être obtenue de plusieurs façons. Par exemple, la vitesse de rotation des moyens de mise en dépression coopérant avec une chambre peut être modulée afin de fournir une force d'aspiration plus ou moins importante au niveau de la chambre, ladite force d'aspiration étant plus élevée lorsque la vitesse de rotation desdits moyens de mise en dépression augmente. La compensation de l'écart de positionnement de l'outil peut aussi être obtenue par la modulation de l'ouverture de l'orifice de la chambre via l'élément d'obturation, l'obturation de l'orifice de la chambre générant une force d'aspiration plus importante. Enfin, il est possible d'utiliser des chambres ayant des surfaces différentes, la surface d'une chambre correspondant à la projection de la chambre sur la plateforme supportant la chambre.

Selon un aspect de l'invention, chaque plateforme comprend un passage, ledit passage permettant au dispositif de mise en dépression de générer une dépression au niveau de la chambre. Le passage permet une communication entre le dispositif de mise en dépression et la chambre. Avantageusement, le passage est positionné au niveau de l'axe central de la chambre.

Selon un autre aspect de l'invention, lesdites au moins deux chambres et l'outil sont alignés selon un même axe. Plus particulièrement, les deux chambres et l'outil sont agencés de manière rectiligne les uns par rapport aux autres.

Selon un autre aspect de l'invention, l'organe d'aspiration est configuré pour exercer une force, ladite force étant supérieure à la force exercée par le poids du dispositif automatisé. Cette configuration permet au dispositif automatisé d'être plaqué contre le panneau de construction. Plus particulièrement, la somme des forces d'aspiration exercées au niveau desdites au moins deux chambres est supérieure à la somme de la force exercée par le poids du dispositif automatisé et de la force exercée par l'outil sur le panneau de construction. Lorsque l'outil réalise une opération mécanique sur le panneau de construction, l'outil exerce une force sur le panneau de construction, ladite force induisant à son tour une contre-force de valeur identique et de direction opposée. Ainsi, la contre-force exercée par l'outil sur le panneau de construction s'ajoute à la force exercée par le poids du dispositif automatisé. Cette configuration permet au dispositif automatisé d'être plaqué contre le panneau de construction même lorsque l'outil réalise une opération mécanique sur le panneau de construction.

Selon un aspect de l'invention, au moins une plateforme supporte l'au moins un moyen de mise en mouvement du dispositif automatisé. Les moyens de mise en mouvement du dispositif automatisé sont en appui contre le panneau de construction lorsque le dispositif automatisé adhère audit panneau de construction. Cette configuration permet au dispositif automatisé de se déplacer sur le panneau de construction. Préférentiellement, l'au moins un moyen de mise en mouvement comprend au moins une roue et un moteur électrique d'entraînement de la roue.

Préférentiellement, les moyens de mise en mouvement du dispositif automatisé sont supportés par au moins deux plateformes distinctes. Cette configuration permet d'accorder une plus grande stabilité au dispositif automatisé sur le panneau de construction.

Selon un autre aspect de l'invention, l'opération mécanique réalisée par l'outil correspond à une opération de fixation, de découpe ou de ponçage du panneau de construction. Plus particulièrement, la fixation du panneau de construction sur l'ossature peut se faire à l'aide de vis, d'agrafes ou de clous, l'outil étant alors un outil de fixation, notamment une visseuse, une agrafeuse ou une cloueuse, respectivement. D'autre part, la découpe du panneau de construction peut se faire à l'aide d'une scie cloche, d'une scie sauteuse ou encore d'une lame, l'outil étant alors respectivement une scie cloche, une scie sauteuse, ou une lame. Enfin, le ponçage du panneau de construction peut se faire à l'aide de feuilles abrasives, l'outil étant configuré pour provoquer un mouvement de translation ou de rotation des feuilles abrasives contre le panneau de construction, l'outil étant alors une ponceuse.

Des modes de réalisation variés de l'invention sont prévus, intégrant selon l'ensemble de leurs combinaisons possibles les différentes caractéristiques optionnelles exposées ci-dessus.

D'autres caractéristiques, détails et avantages de l'invention apparaitront encore au travers de la description qui suit d'une part, et de plusieurs exemples de réalisation donnés à titre indicatif et non limitatif en référence aux dessins schématiques annexés d'autre part, sur lesquels :
- la FIGURE 1 représente une vue en perspective d'un exemple de réalisation d'un dispositif automatisé conforme à l'invention, ledit dispositif automatisé étant en situation d'utilisation.
- la FIGURE 2 représente une vue en perspective d'un exemple de réalisation d'un dispositif automatisé conforme à l'invention, ledit dispositif comprenant deux plateformes.
- la FIGURE 3 représente une vue en perspective d'un exemple de réalisation d'un dispositif automatisé conforme à l'invention, ledit dispositif comprenant deux chambres de tailles différentes.
- la FIGURE 4 représente une vue du dessous de l'exemple de réalisation illustré à la FIGURE 3.
- la FIGURE 5 représente une vue en perspective d'un exemple de réalisation d'un dispositif automatisé conforme à l'invention, ledit dispositif comprenant quatre plateformes.
- la FIGURE 6 représente une vue du dessous de l'exemple de réalisation illustré à la FIGURE 5.

Dans la suite de la description, le dessous du dispositif automatisé correspond à une face du dispositif automatisé du côté des chambres. A l'inverse, le dessus du dispositif automatisé correspond à une face du dispositif automatisé opposée au-dessous du dispositif automatisé.

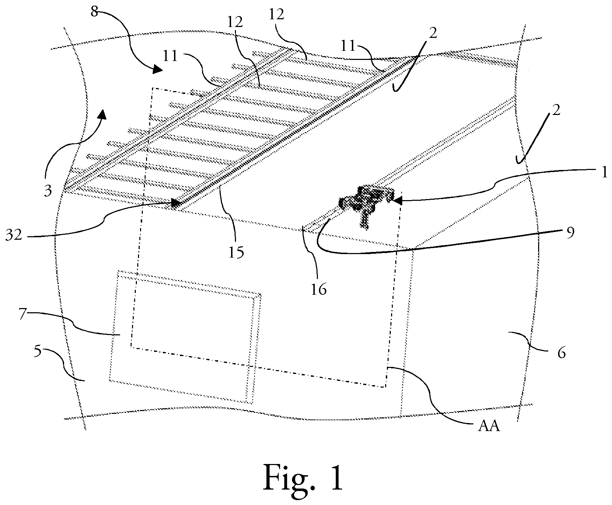

En se référant tout d'abord à la figure 1, on voit un dispositif automatisé 1 objet de la présente invention en situation. Ce dernier progresse sur un panneau de construction 2 qui recouvre un plafond 3 situé dans une pièce schématisée sur la figure 1 par deux pans de murs 5, 6 inclinés à 90° par rapport à un plan horizontal, ce plan horizontal étant parallèle à un plan d'extension principal du plafond 3. Un des pans de murs est percé d'une fenêtre 7. L'autre en est dépourvu. Cette mise en situation est non limitative, et il envisagé par l'invention de disposer le dispositif automatisé 1 sur un panneau de construction 2 participant à former ou recouvrant l'un ou l'autre des pans de murs 5, 6.

Le panneau de construction 2 est ainsi solidarisé sur le plafond 3 par l'intermédiaire d'une ossature 8. Plus précisément, une pluralité de panneaux de construction 2 sont solidarisés sur ce plafond par l'intermédiaire de cette ossature 8.

Selon l'exemple illustré sur la figure 1, la fixation de l'un de ces panneaux de construction 2 sur ce plafond 3 est en cours de réalisation, c'est-à-dire que le dispositif automatisé 1 selon l'invention est entrain de fixer le panneau de construction 2 sur l'ossature 8, elle-même fixée préalablement sur le plafond 3. La fixation du panneau de construction 2 sur l'ossature 8 est un exemple d'opération mécanique que le dispositif automatisé 1 peut mettre en oeuvre, la description faite par la suite étant en rapport avec cette opération de fixation du panneau de construction 2 sur l'ossature 8.

Cette ossature 8 peut par exemple consister en une ossature métallique comprenant des rails 11 montés sur des montants 12 perpendiculaires à ces rails 11. Par exemple, l'ossature 8 peut comprendre une pluralité de rails 11, les rails 11 étant supportés par une pluralité de montants 12, les montants 12 s'étendant perpendiculairement aux rails 11. Ces rails 11 forment respectivement une zone d'appui et de fixation du panneau de construction 2. Autrement dit, chaque panneau de construction 2 comprend un premier bord 15 destiné à être fixé sur un premier rail et un deuxième bord 16 destiné à être fixé sur un deuxième rail. On pourra également prévoir que chaque panneau de construction 2 soit en outre fixé sur deux rails supplémentaires centraux, c'est-à-dire un troisième rail et un quatrième rail, tous deux par exemple parallèle à ce premier rail et/ou à ce deuxième rail.

Le dispositif automatisé 1 selon l'invention est ainsi configuré pour fixer chaque panneau de construction 2 sur chacun de ces rails 11. Pour ce faire, le dispositif automatisé 1 selon l'invention présente des moyens qui lui permettent de se déplacer sur le panneau de construction 2 et des moyens qui lui permettent d'adhérer de manière autonome au panneau de construction 2.

Alternativement, cette ossature 8 peut être réalisée en bois. Il est entendu que tout autre matériau compatible avec l'invention est envisageable pour réaliser cette ossature 8 sans sortir du contexte de l'invention.

Tel que représenté, le panneau de construction 2 est solidarisé sur l'ossature 8 grâce à des moyens de fixation 9. On comprend que chacun de ces moyens de fixation 9 traverse le panneau de construction 2 pour se ficher dans l'un des rails 11 de l'ossature 8 et ainsi assurer cette solidarisation. Par exemple, ces moyens de fixation 9 peuvent être des vis, des clous ou encore des agrafes. Deux rangées rectilignes de moyens de fixation 9 sont illustrées dans la figure 1. Avantageusement, deux panneaux de construction 2 adjacents sont fixés sur un même rail. Alternativement, on pourra prévoir que chaque panneau de construction 2 soit fixé sur des rails qui lui sont propres.

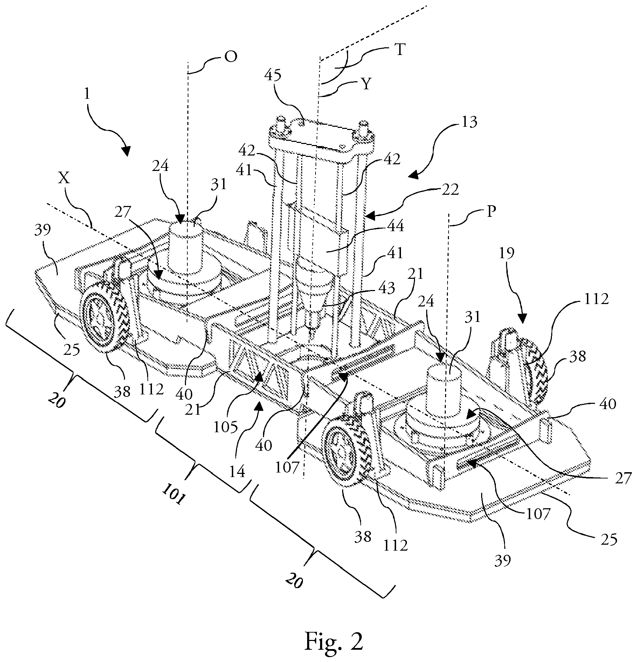

Tel que représenté sur la figure 2, le dispositif automatisé 1 comprend uniquement deux plateformes 20. Chaque plateforme 20 comprend un plateau 39, un organe d'aspiration 24 et un moteur électrique d'aspiration 31.

Le dispositif automatisé 1 comprend un châssis 14 porteur d'un outil 13 configuré pour réaliser une opération mécanique, le dispositif automatisé 1 comprenant deux organes d'aspiration 24 et quatre moyens de mise en mouvement 19. Chaque organe d'aspiration 24 comprend une chambre 26 permettant au dispositif automatisé 1 d'adhérer à un panneau de construction, l'outil 13 étant situé entre les chambres 26. On comprend ici que l'outil 13 est disposé dans une zone ménagée entre les plateformes 20. Cette configuration avec l'outil 13 positionné entre les chambres 26 permet de stabiliser le dispositif automatisé 1 sur le panneau de construction contre lequel le dispositif automatisé 1 est en appui, même lors de la réalisation de l'opération mécanique sur le panneau de construction par l'outil.

Le dispositif automatisé 1 s'étend selon un axe longitudinal X et selon un axe transversal X', ces axes étant perpendiculaires entre eux.

Le châssis 14 du dispositif automatisé 1 s'étend selon un plan, dit plan d'extension général du châssis et qui correspond au plan d'extension longitudinal du dispositif automatisé 1, le plan d'extension général étant celui dans lequel s'inscrivent l'axe longitudinal X et l'axe transversal X'.

Le châssis 14 du dispositif automatisé 1 correspond à la structure porteuse du dispositif automatisé 1. Ainsi, le châssis 14 comprend des renforts 21. Les renfort 21 présentent des évidements 105 ménagés par exemple en regard d'une partie centrale 101 du châssis 14. Selon l'exemple illustré ici, ces évidements 105 ont chacun une forme triangulaire, mais il est entendu que toute autre forme serait envisageable sans sortir du contexte de l'invention.

Le châssis 14 comprend des renforts additionnels 40. Les renforts additionnels 40 relient deux renforts 21 entre eux. Les renforts additionnels 40 s'étendent perpendiculairement à l'axe selon lequel s'étendent les renforts 21 qu'ils relient. Ainsi, les renforts additionnels 40 participent à la rigidification du châssis 14 du dispositif automatisé 1. Selon l'exemple illustré, une paire de renforts additionnels 40 est agencée en regard de chaque plateforme 20. Plus précisément, les renforts additionnels 40 sont répartis deux à deux autour de chaque organe d'aspiration 24.

Les renforts additionnels 40 comprennent au moins un enlèvement de matière 107 de sorte que ces renforts additionnels 40 n'alourdissent pas le dispositif automatisé 1. Selon l'exemple illustré, chaque enlèvement de matière 107 prend la forme d'une fente qui s'étend selon l'axe du renfort additionnel 40 dans lequel ledit enlèvement de matière 107 est ménagé.

Le châssis 14 comprend une partie centrale 101, ladite partie centrale 101 étant située entre les plateformes 20. La partie centrale 101 est supportée par les renforts 21 du châssis 14.

Le châssis 14 est porteur de l'outil 13. L'outil 13 du dispositif automatisé 1 s'étend selon un axe Y qui s'étend perpendiculairement au plan défini par l'axe longitudinal X et l'axe transversal X'. L'outil 13 s'étend vers le dessus du dispositif automatisé 1.

La partie centrale 101 du châssis 14 comprend une ouverture 103, l'ouverture 103 permettant à l'outil 13 d'accéder au panneau de construction afin de réaliser l'opération mécanique sur ledit panneau de construction.

Les plateformes 20 sont disposées autour de l'outil 13 du dispositif automatisé 1.

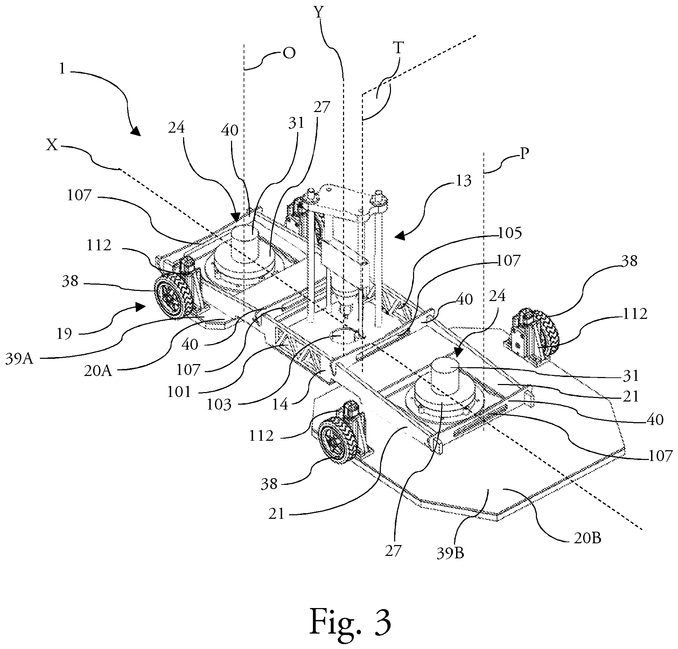

Chaque plateforme 20 comprend un plateau 39, un dispositif d'étanchéité 25, une chambre 26, un moyen 27 et un moteur électrique d'aspiration 31. Chaque plateau est fixé sur les renforts 21 du châssis 14. Chaque chambre 26 est délimitée au moins partiellement par une plateforme 20 distincte d'une autre plateforme 20. Chaque chambre 26 est située au niveau d'une face inférieure du plateau 39, la face inférieure du plateau 39 étant la face de ce plateau orientée contre le panneau de construction lorsque le dispositif automatisé 1 adhère sur celui-ci. Dans l'exemple de réalisation illustré aux figures 2 et 3, chaque chambre 26 possède une forme générale octogonale. Alternativement, chaque chambre 26 peut posséder une forme générale en forme de cercle, de triangle, de rectangle ou toute autre forme géométrique.

Chaque organe d'aspiration 24 comprend un passage 28 ménagé au travers de chacun des plateaux 39, ledit passage 28 permettant à chaque moteur électrique d'aspiration 31 de générer une dépression au niveau d'une chambre 26 correspondante.

Chaque chambre 26 s'étend autour d'un axe central O, P, l'axe central O, P d'une chambre 26 étant défini par une droite qui s'étend perpendiculairement au plan d'extension général du châssis automatisé, ladite droite passant par le centre de la chambre 26.

Chaque plateforme 20 supporte des moyens de mise en mouvement 19 du dispositif automatisé 1, les deux plateformes 20 étant situées symétriquement l'une par rapport à l'autre de part et d'autre de l'outil 13. Chacune des deux plateformes 20 comprend deux moyens de mise en mouvement 19. Chaque moyen de mise en mouvement 19 comprend une roue 38 et un moteur électrique d'entrainement, non représenté, configuré pour entraîner la roue 38 avec laquelle il coopère. Chaque roue 38 vient en appui contre le panneau de construction lors d'une utilisation du dispositif automatisé 1. Chaque roue 38 est supportée par un support 112, ledit support étant solidaire du plateau 39 d'une plateforme 20.

Dans sa généralité, cet outil de fixation 13 s'étend principalement selon la direction Y d'extension perpendiculaire au plan dans lequel s'étendent les plateaux 39 du châssis 14. L'outil de fixation 13 comprend au moins une tête 43 pilotée par un moteur 44, par exemple un moteur électrique. Tel que représenté sur la figure 2, cette tête 43 et le moteur 44 sont portés par une potence 22 formée de deux colonnes 41 reliées entre elles par un bloc arrière 45. Plus particulièrement, la tête 43 et le moteur 44 sont reliés au bloc arrière 45 de la potence 22 par deux colonnettes 42 qui s'étendent parallèlement à la direction Y d'extension de l'outil de fixation 13.

Cette configuration dans laquelle l'outil 13 est positionné entre les plateformes 20, et donc entre les chambres 26 délimitées partiellement par les plateformes 20, permet d'assurer la stabilité du dispositif automatisé 1 sur le panneau de construction, même lors de la réalisation d'une opération mécanique par l'outil 13 sur le panneau de construction.

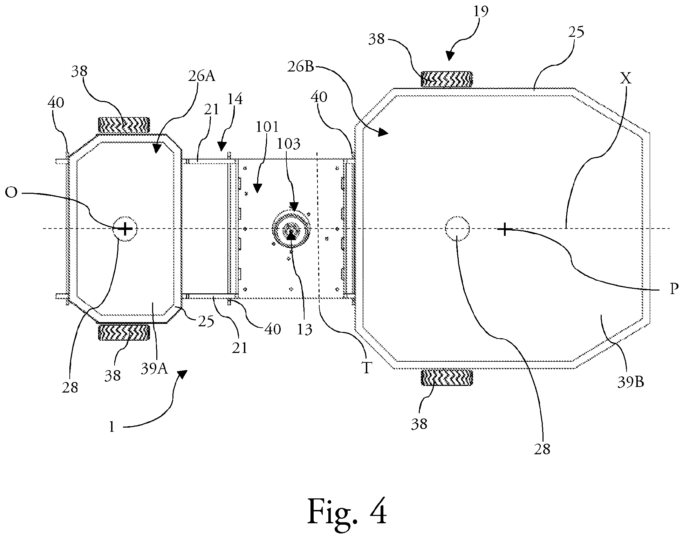

En référence aux figures 3 et 4, un exemple de réalisation d'un dispositif automatisé 1 conforme à l'invention est décrit, ledit dispositif automatisé 1 comprenant deux plateformes 20A, 20B de tailles différentes. Ainsi, une première plateforme 20A comprend un premier plateau 39A et une deuxième plateforme 20B comprend un deuxième plateau 39B, le premier plateau 39A ayant une surface projetée sur un plan plus faible que la surface du deuxième plateau 39B, projetée sur un même plan.

La première plateforme 20A délimite partiellement une première chambre 26A. La deuxième plateforme 20B délimite partiellement une deuxième chambre 26B. La première chambre 26A et la deuxième chambre 26B sont chacune délimitées par un dispositif d'étanchéité 25 ainsi que par le premier plateau 39A ou le deuxième plateau 39B. La deuxième chambre 26B est d'un volume supérieur à un volume de la première chambre 26A.

Chaque chambre 26 est délimitée sur son contour par le dispositif d'étanchéité 25, le dispositif d'étanchéité 25 étant solidaire du plateau 39 de la plateforme 20 supportant ladite chambre 26. Le dispositif d'étanchéité 25 est un joint qui vient en appui contre le panneau de construction lors d'une utilisation du dispositif automatisé 1, ledit dispositif d'étanchéité 25 étant positionné sur une face intérieure du plateau 39 de chaque plateforme 20.

L'exemple de réalisation illustré aux figures 3 et 4 permet ainsi de compenser l'écart de positionnement de l'outil 13 par rapport à un plan transversal central T du dispositif automatisé 1, le plan transversal central T du dispositif automatisé 1 étant perpendiculaire au plan d'extension général du châssis et situé à égale distance de l'axe central O de la première chambre 26A et de l'axe P de la deuxième chambre 26B. En effet, le décalage de l'outil 13 provoque un décalage de la force qu'il génère quand il réalise l'opération mécanique. La différence de surfaces projetées entre la première chambre 26A et la deuxième chambre 26B a pour fonction de gérer ce décalage de force, en offrant une force plus importante au niveau de la chambre dont l'outil est le plus proche.

Ainsi, la deuxième chambre 26B présente une surface projetée supérieure à la surface projetée de la première chambre 26A. La surface projetée de la deuxième chambre 26B comprend une longueur supérieure à la longueur de la surface projetée de la première chambre 26A, la longueur étant la dimension parallèle à l'axe longitudinal X. La surface projetée de la deuxième chambre 26B comprend également une largeur supérieure à la largeur de la surface projetée de la première chambre 26A, la largeur étant la dimension parallèle à l'axe transversal X'.

Le passage 28 de la deuxième chambre 26B est décalé par rapport à l'axe central P de la deuxième chambre 26B. Le passage 28 est ainsi décalé sur l'axe X vers l'outil 13 par rapport à l'axe central P de la deuxième chambre 26B.

Les moyens de mise en mouvement 19 supportés par la deuxième plateforme 20B sont également décalés par rapport à l'axe central P de la deuxième chambre 26B, un tel décalage étant opéré vers l'outil 13 par rapport à l'axe P de la deuxième chambre 26B.

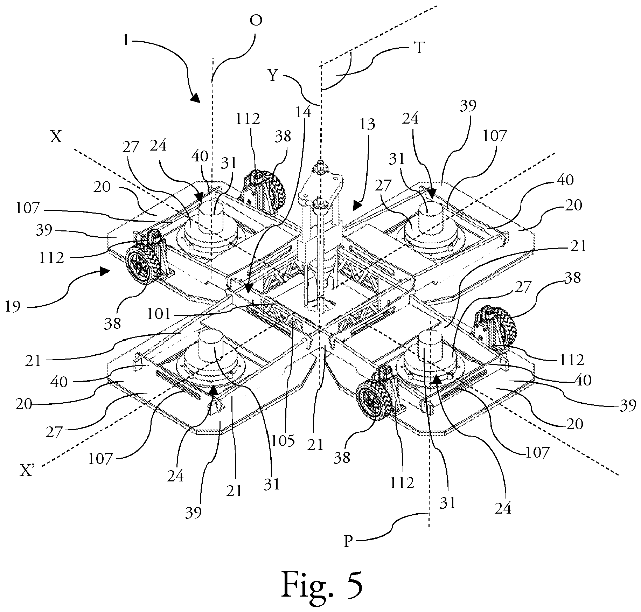

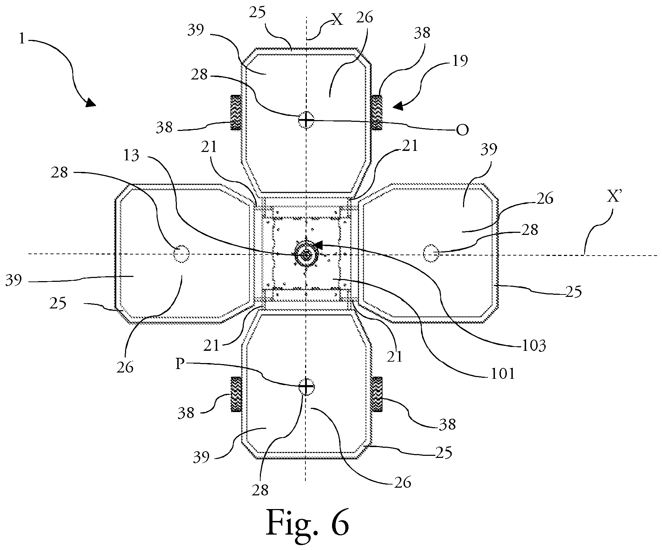

En référence aux figures 5 et 6, un exemple de réalisation d'un dispositif automatisé 1 conforme à l'invention est décrit, ledit dispositif automatisé 1 comprenant quatre plateformes 20.

Le châssis 14 comprend les quatre plateformes 20, lesdites plateformes 20 étant disposées dans le plan défini par l'axe longitudinal X et par l'axe transversal X' du châssis 14. Les quatre plateformes 20 sont régulièrement angulairement disposées autour du point d'intersection de l'axe Y de l'outil 13 avec le plan défini ci-dessus, chaque plateforme 20 étant ainsi angulairement espacée de 90°.

Chaque chambre 26 est délimitée sur son contour par un dispositif d'étanchéité 25, le dispositif d'étanchéité 25 étant solidaire du plateau 39 de la plateforme 20 supportant ladite chambre 26. Le dispositif d'étanchéité 25 est un joint qui vient en appui contre le panneau de construction lors d'une utilisation du dispositif automatisé 1, ledit dispositif d'étanchéité 25 étant positionné sur une face intérieure du plateau 39 de chaque plateforme 20.

Deux plateformes 20 supportent des moyens de mise en mouvement 19 du dispositif automatisé 1, les deux plateformes 20 étant situées symétriquement l'une par rapport à l'autre de part et d'autre de l'outil 13. Chacune des deux plateformes 20 comprend deux moyens de mise en mouvement 19. Chaque moyen de mise en mouvement 19 comprend une roue 38 et un moteur électrique d'entrainement, non représenté, configuré pour entraîner la roue 38 avec laquelle il coopère. Chaque roue 38 vient en appui contre le panneau de construction lors d'une utilisation du dispositif automatisé 1. Chaque roue 38 est supportée par un support 112, ledit support étant solidaire du plateau 39 d'une plateforme 20. Les deux autres plateformes 20 sont dépourvus de moyens de mise en mouvement 19 du dispositif automatisé 1.

L'outil 13 est positionné entre les quatre plateformes 20. Cette configuration permet au dispositif automatisé 1 d'être stable sur le panneau de construction 2 même lors de la réalisation d'une opération mécanique par l'outil 13 sur le panneau de construction 2.

La description des plateformes 20 effectuée ci-dessus est valable pour chacune des quatre plateformes 20 constitutives de la variante illustrée au figures 5 et 6.

En synthèse, l'invention concerne un dispositif automatisé 1 configuré pour se déplacer en appui sur un panneau de construction 2. Le dispositif automatisé 1 comprend un châssis 14 porteur d'un outil 13, ledit outil 13 étant configuré pour réaliser une opération mécanique sur le panneau de construction 2. Le dispositif automatisé 1 comprend au moins un organe d'aspiration 24 et au moins un moyen de mise en mouvement 19 du dispositif automatisé 1. L'organe d'aspiration 24 comprend au moins deux chambres 26 permettant au dispositif automatisé 1 d'adhérer au panneau de construction 2, l'outil 13 étant situé entre les chambres 26, que celles-ci soient au nombre de deux ou de quatre.

Bien sûr, l'invention n'est pas limitée aux exemples qui viennent d'être décrits et de nombreux aménagements peuvent être apportés à ces exemples sans sortir du cadre de l'invention, qui est définie par les revendications ci-jointes.

Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier, toutes les variantes et modes de réalisation décrits précédemment sont combinables entre eux.

## Revendications

1. Dispositif automatisé (1) configuré pour se déplacer en appui sur un panneau de construction (2), le dispositif automatisé comprenant un châssis (14) porteur d'un outil (13), ledit outil (13) étant configuré pour réaliser au moins une opération mécanique sur le panneau de construction (2), le dispositif automatisé (1) comprenant au moins un organe d'aspiration (24) et au moins un moyen de mise en mouvement (19) du dispositif automatisé (1) le long du panneau de construction (2), l'organe d'aspiration (24) comprenant au moins deux chambres (26) configurées pour maintenir le dispositif automatisé (1) contre le panneau de construction (2), l'organe d'aspiration (24) comprenant au moins un dispositif d'étanchéité (25) et un plateau (39, 39A, 39B) constitutif du châssis (14), le dispositif d'étanchéité (25) et le plateau (39, 39A, 39B) délimitant l'une des chambres (26, 26A, 26B,
le dispositif étant **caractérisé en ce que** l'outil (13) est situé entre lesdites au moins deux chambres (26, 26A, 26B).

2. Dispositif automatisé (1) selon la revendication précédente, comprenant au moins un moteur électrique d'aspiration (31) relié aux chambres (26, 26A, 26B) de sorte à générer dans ces chambres (26) une dépression.

3. Dispositif automatisé (1) selon l'une quelconque des revendications précédentes, dans lequel lesdites au moins deux chambres (26, 26A, 26B) sont régulièrement angulairement disposées autour de l'outil (13).

4. Dispositif automatisé (1) selon l'une quelconque des revendications précédentes, dans lequel chaque chambre (26A, 26B) s'étend autour d'un axe central (O, P), l'outil (13) étant disposé à égale distance de l'axe central (O, P) de chaque chambre (26A, 26B).

5. Dispositif automatisé (1) selon l'une quelconque des revendications 1 à 3, dans lequel chaque chambre (26A, 26B) s'étend autour d'un axe central (O, P), l'outil (13) étant plus proche de l'axe central (O) d'une première chambre (26A) que de l'axe central (P) de la deuxième chambre (26B).

6. Dispositif automatisé (1) selon la revendication 5, dans lequel l'organe d'aspiration (24) est configuré pour exercer une force d'aspiration qui compense un décalage de l'outil (13) par rapport à un plan transversal central (T) du dispositif automatisé (1).

7. Dispositif automatisé (1) selon l'une quelconque des revendications précédentes, dans lequel une surface projetée sur un plan de l'une chambre (26B) est supérieure à une surface projetée sur ce même plan de l'autre chambre (26A).

8. Dispositif automatisé (1) selon l'une quelconque des revendications précédentes, dans lequel au moins deux chambres (26) et l'outil (13) sont alignés sur un même axe (X).

9. Dispositif automatisé (1) selon l'une quelconque des revendications précédentes dans lequel l'organe d'aspiration (24) est configuré pour que la somme des forces d'aspiration exercées au niveau au moins des deux chambres (26) est supérieure à la somme d'une force exercée par le poids du dispositif automatisé (1) et d'une force exercée par l'outil (13) sur le panneau de construction (2).

10. Dispositif automatisé (1) selon l'une quelconque des revendications précédentes, dans lequel l'outil (13) est choisi parmi une visseuse, une agrafeuse, un pistolet à clous, une scie cloche, une scie sauteuse, une lame ou une ponceuse.

## Patentansprüche

1. Automatisierte Vorrichtung (1), welche dafür ausgelegt ist, sich an einer Bauplatte (2) anliegend zu bewegen, wobei die automatisierte Vorrichtung ein Gestell (14) umfasst, das ein Werkzeug (13) trägt, wobei das Werkzeug (13) dafür ausgelegt ist, mindestens einen mechanischen Arbeitsgang an der Bauplatte (2) durchzuführen, wobei die automatisierte Vorrichtung (1) mindestens ein Saugorgan (24) und mindestens ein Mittel zum Bewegen (19) der automatisierten Vorrichtung (1) entlang der Bauplatte (2) umfasst, wobei das Saugorgan (24) mindestens zwei Kammern (26) umfasst, die dafür ausgelegt sind, die automatisierte Vorrichtung (1) an der Bauplatte (2) zu halten, wobei das Saugorgan (24) mindestens eine Dichtungsvorrichtung (25) und eine Platte (39, 39A, 39B), die Bestandteil des Gestells (14) ist, umfasst, wobei die Dichtungsvorrichtung (25) und die Platte (39, 39A, 39B) eine der Kammern (26, 26A, 26B) begrenzen,
wobei die Vorrichtung **dadurch gekennzeichnet ist, dass** sich das Werkzeug (13) zwischen den mindestens zwei Kammern (26, 26A, 26B) befindet.

2. Automatisierte Vorrichtung (1) nach dem vorhergehenden Anspruch, welche mindestens einen elektrischen Saugmotor (31) umfasst, der mit den Kammern (26, 26A, 26B) verbunden ist, um in diesen Kammern (26) einen Unterdruck zu erzeugen.

3. Automatisierte Vorrichtung (1) nach einem der vorhergehenden Ansprüche, wobei die mindestens zwei Kammern (26, 26A, 26B) winkelmäßig gleichmäßig um das Werkzeug (13) herum angeordnet sind.

4. Automatisierte Vorrichtung (1) nach einem der vorhergehenden Ansprüche, wobei sich jede Kammer (26A, 26B) um eine Mittelachse (O, P) herum erstreckt, wobei das Werkzeug (13) in gleichem Abstand von der Mittelachse (O, P) jeder Kammer (26A, 26B) angeordnet ist.

5. Automatisierte Vorrichtung (1) nach einem der Ansprüche 1 bis 3, wobei sich jede Kammer (26A, 26B) um eine Mittelachse (O, P) herum erstreckt, wobei das Werkzeug (13) der Mittelachse (O) einer ersten Kammer (26A) näher als der Mittelachse (P) der zweiten Kammer (26B) ist.

6. Automatisierte Vorrichtung (1) nach Anspruch 5, wobei das Saugorgan (24) dafür ausgelegt ist, eine Saugkraft auszuüben, welche einen Versatz des Werkzeugs (13) in Bezug auf eine Quermittelebene (T) der automatisierten Vorrichtung (1) ausgleicht.

7. Automatisierte Vorrichtung (1) nach einem der vorhergehenden Ansprüche, wobei eine auf eine Ebene der einen Kammer (26B) projizierte Fläche größer als eine auf dieselbe Ebene der anderen Kammer (26A) projizierte Fläche ist.

8. Automatisierte Vorrichtung (1) nach einem der vorhergehenden Ansprüche, wobei mindestens zwei Kammern (26) und das Werkzeug (13) auf derselben Achse (X) ausgerichtet sind.

9. Automatisierte Vorrichtung (1) nach einem der vorhergehenden Ansprüche, wobei das Saugorgan (24) so ausgebildet ist, dass die Summe der Saugkräfte, die an den mindestens zwei Kammern (26) ausgeübt werden, größer als die Summe einer vom Gewicht der automatisierten Vorrichtung (1) ausgeübten Kraft und einer vom Werkzeug (13) ausgeübten Kraft auf die Bauplatte (2) ist.

10. Automatisierte Vorrichtung (1) nach einem der vorhergehenden Ansprüche, wobei das Werkzeug (13) aus einem Kraftschrauber, einer Heftmaschine, einer Nagelpistole, einer Glockensäge, einer Stichsäge, einem Schneidmesser und einer Schleifmaschine ausgewählt ist.

## Claims

1. An automated device (1) configured to move in contact with a building board (2), the automated device comprising a chassis (14) bearing a tool (13), said tool (13) being configured to perform at least one mechanical operation on the building board (2), the automated device (1) comprising at least one suction member (24) and at least one means (19) for setting the automated device (1) in motion along the building board (2), **characterized in that** the suction member (24) comprises at least two chambers (26) configured to hold the automated device (1) against the building board (2), the suction member (24) comprising at least one sealing device (25) and a plate (39, 39A, 39B) forming the chassis (14), the sealing device (25) and the plate (39, 39A, 39B) delimiting one of the chambers (26, 26A, 26B), the device being **characterized in that** the tool (13) is situated between said at least two chambers (26, 26A, 26B).

2. The automated device (1) as claimed in the preceding claim, comprising at least one suction electric motor (31) linked to the chambers (26, 26A, 26B) so as to generate a depressurization in these chambers (26).

3. The automated device (1) as claimed in any one of the preceding claims, wherein said at least two chambers (26, 26A, 26B) are evenly angularly disposed around the tool (13).

4. The automated device (1) as claimed in any one of the preceding claims, wherein each chamber (26A, 26B) extends around a central axis (O, P), the tool (13) being disposed equidistantly from the central axis (O, P) of each chamber (26A, 26B).

5. The automated device (1) as claimed in any one of claims 1 to 4, wherein each chamber (26A, 26B) extends around a central axis (O, P), the tool (13) being closer to the central axis (O) of a first chamber (26A) than the central axis (P) of the second chamber (26B).

6. The automated device (1) as claimed in claim 6, wherein the suction member (24) is configured to exert a suction force which compensates for an offset of the tool (13) relative to a central transverse plane (T) of the automated device (1).

7. The automated device (1) as claimed in any one of the preceding claims, wherein a surface projected onto a plane of one chamber (26B) is greater than a surface projected onto this same plan of the other chamber (26A).

8. The automated device (1) as claimed in any one of the preceding claims, wherein at least two chambers (26) and the tool (13) are aligned on one and the same axis (X).

9. The automated device (1) as claimed in any one of the preceding claims, wherein the suction member (24) is configured so that the sum of the suction forces exerted in at least the two chambers (26) is greater than the sum of a force exerted by the weight of the automated device (1) and a force exerted by the tool (13) on the building board (2).

10. The automated device (1) as claimed in any one of the preceding claims, wherein the tool (13) is chosen from among a power screwdriver, a stapler, a nail gun, a hole saw, a jigsaw, a blade or a sander.
